(19) Europäisches Patentamt
European Patent Office
Office européen des brevets

(11) Publication number: 0 254 514 B1

# (12) EUROPEAN PATENT SPECIFICATION

(45) Date of publication of the patent specification: 10.10.90

(51) Int. Cl.[5]: **C07C 323/47**, A01N 35/10

(21) Application number: 87306397.8

(22) Date of filing: 20.07.87

(54) **Cyclohexane herbicides.**

(30) Priority: 22.07.86 JP 172474/86

(43) Date of publication of application: 27.01.88 Bulletin 88/4

(45) Publication of the grant of the patent: 10.10.90 Bulletin 90/41

(84) Designated Contracting States: CH DE FR GB LI

(56) References cited:
GB-A- 1 589 003
US-A- 4 515 729
US-A- 4 626 276

(73) Proprietor: SUMITOMO CHEMICAL COMPANY, LIMITED, Kitahama 4-chome 5-33, Chuo-ku Osaka 541(JP)

(72) Inventor: Arai, Kenji, 14-7, Mefu-2-chome, Takarazuka-shi(JP)
Inventor: Mito, Nobuaki, 14-7, Mefu-2-chome, Takarazuka-shi(JP)
Inventor: Morita, Kouichi, 11-7-406, Sonehigashinocho-2-chome, Toyonaka-shi(JP)
Inventor: Hirata, Naonori, 704-2-7-510 Kanaokacho, Sakai-shi(JP)

(74) Representative: Harrison, David Christopher et al, MEWBURN ELLIS & CO 2/3 Cursitor Street, London EC4A 1BQ(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 254 514 B1

ACTORUM AG

## Description

The present invention relates to novel cyclohexanes represented by the general formula (I),

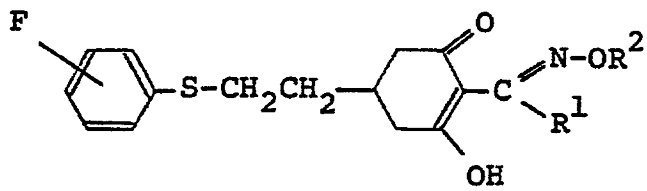

(I)

wherein $R^1$ represents a hydrogen atom or a $(C_1-C_6)$alkyl or $(C_1-C_4)$alkoxymethyl group, and $R^2$ represents a $(C_1-C_4)$alkyl, $(C_3-C_6)$alkenyl, $(C_3-C_6)$alkynyl, halo$(C_3-C_6)$alkynyl, halo$(C_3-C_6)$alkenyl, cyano$(C_1-C_4)$alkyl, $(C_1-C_4)$alkoxymethyl or $(C_1-C_4)$alkylthiomethyl group, their salts, production of these compounds and herbicides containing the compounds as an active ingredient.

It is described in Japanese Patent Publication Kokai (Laid-open) Nos. 115349/1979 and 46749/1979 that cyclohexane derivatives can be used as an active ingredient for herbicides.

These compounds, however, may not always be said to be satisfactory because of their poor herbicidal activity and poor selectivity between crops and weeds.

In view of the situation like this, the present inventors extensively studied to develop a compound having excellent herbicidal activity, and as a result, found a compound having excellent herbicidal activity at low dosage rates as well as showing no phytotoxicity to crops. The present inventors thus attained to the present invention.

The present compounds exhibit excellent herbicidal activity as well as excellent selectivity between crops and weeds. That is, the present compounds, in foliage treatment and soil treatment in plow field, have a herbicidal activity against various weeds in question, for example broadleaf weeds such as common purslane (Portulaca oleracea), redroot pigweed (Amaranthusretroflexus), radish (Raphanus sativus), velvetleaf (Abutilon theophrasti), tall morningglory (Ipomoeapurpurea), black nightshade (Solanum nigrum), persian speedwell (Veronica persica), etc., grassy weeds such as Japanese millet (Echinochloa frumentacea), barnyardgrass (Echinochloa crus-galli), green foxtail (Setaria viridis), giant foxtail (Setaria faberi), large crabgrass (Digitaria sanguinalis), fall panicum (Panicum dichotomiflorum), annual bluegrass (Poa annua), blackgrass (Alopecurus myosuroides), oat (Avena sativa), wild oat (Avena fatua), Johnsongrass (Sorghum halepense), downy brome (Bromus tectorum), quackgrass (Agropyron repens), etc., and yet, their phytotoxicity to main crops such as corn, wheat, barley, rice, soybean, cotton, beet, etc. is not such a one as to cause a problem.

Further, the present compounds, in treatment under flooded condition in paddy field, have a herbicidal activity against various weeds in question, for example grassy weeds such as barnyardgrass (Echinochloa oryzicola), etc., and broadleaf weeds such as common falsepimpernel (Lindernia procumbens), long stemmed waterwort (Elatinetriandra), etc., and yet, their phytotoxicity to rice is not such a one as to cause a problem.

Of the present compounds represented by the general formula (I), those in which $R^1$ is a $(C_1-C_3)$alkyl group and $R^2$ is an ethyl, allyl, 3-chloroallyl or 2-buten-1-yl group are preferred.

Next, a method for producing the present compounds will be explained in detail.

The present compounds can be produced by reacting an acylcyclohexane represented by the general formula (II),

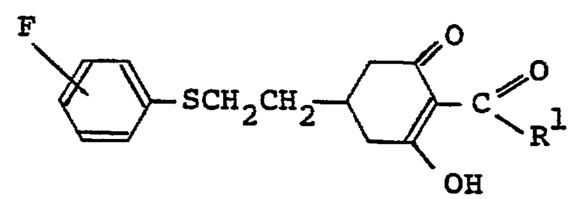

(II)

wherein $R^1$ represents the same meaning as described above, with an amine represented by the general formula (III),

$NH_2OR^2$(III)

wherein $R^2$ represents the same meaning as described above, or its acid, preferably inorganic acid, salt.

This reaction is generally carried out with or without a solvent, and as need arises, in the presence of a base, if necessary. The reaction temperature may be in a range of from 0° to 100°C, and the reaction time may be in a range of from 1 to 24 hours. The amount of the reagents used for reaction may be from 1 to 1.5 equivalents for the amine (III) or its inorganic acid salt, and from 1 to 1.5 equivalents for the base

based on 1 equivalent of the acylcyclohexane (II). The inorganic acid salt of the amine (III) includes hydrochloride, hydrobromide, sulfate, etc.

The solvent includes aliphatic hydrocarbons (e.g. hexane, heptane, ligroin, petroleum ether), aromatic hydrocarbons (e.g. benzene, toluene, xylene), halogenated hydrocarbons (e.g. chloroform, carbon tetrachloride, dichloroethane, chlorobenzene, dichlorobenzene), ethers (e.g. diethyl ether, diisopropyl ether, dioxane, tetrahydrofuran, diethylene glycol dimethyl ether), alcohols (e.g. methanol, ethanol, isopropanol, tert-butanol, octanol, cyclohexanol, methyl cellosolve, diethylene glycol, glycerin), esters (e.g. ethyl formate, ethyl acetate, butyl acetate, diethyl carbonate), nitro compounds (e.g. nitroethane, nitrobenzene), nitriles (e.g. acetonitrile, isobutyronitrile), tertiary amines (e.g. pyridine, triethylamine, N,N-diethylaniline, tributylamine, N-methylmorpholine), acid amides (e.g. formamide, N,N-dimethylformamide, acetamide), sulfur compounds (e.g. dimethyl sulfoxide, sulfolane), water and mixtures thereof.

The base includes organic bases (e.g. pyridine, triethylamine, N,N-diethylaniline), inorganic bases (e.g. sodium hydroxide, potassium hydroxide, sodium carbonate, potassium carbonate, sodium hydride), alkali metal alkoxides (e.g. sodium methoxide, sodium ethoxide), etc.

After completion of the reaction, the reaction solution is poured into water, acidified, subjected to the usual after-treatment such as extraction with organic solvents, concentration, etc., and if necessary, purified by chromatography, distillation, recrystallization, etc.

The present compounds represented by the general formula (I) are considered to have the following tautomeric structures:

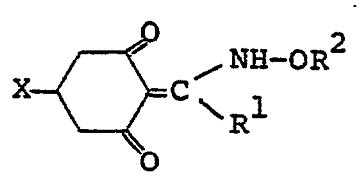

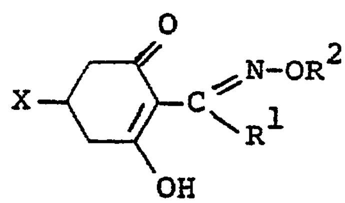

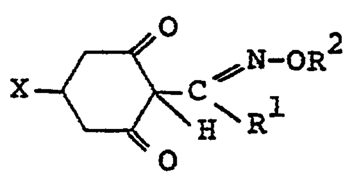

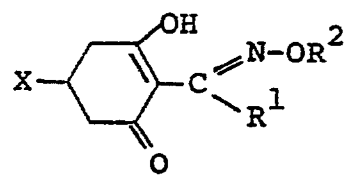

In the above formulae, X represents

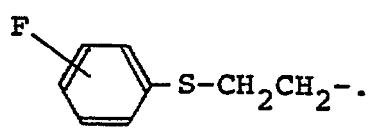

Similarly, acylcyclohexane represented by the general formula (II) is also considered to have the following tautomeric structures:

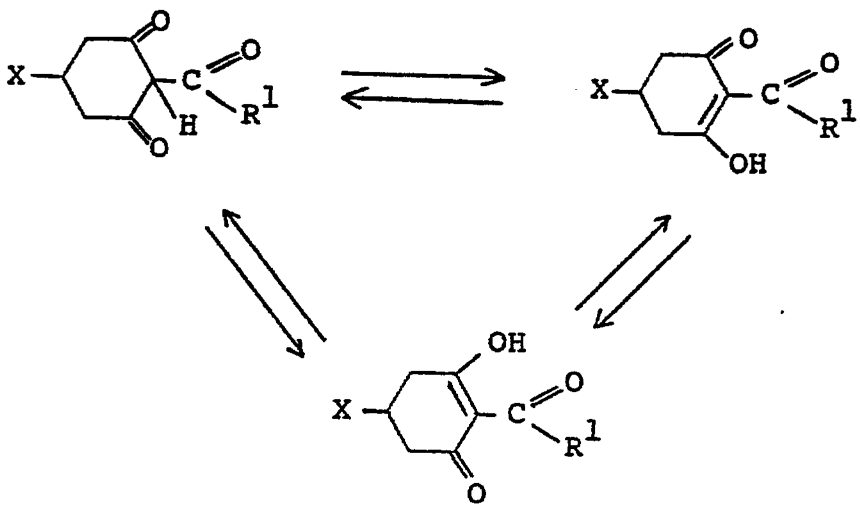

In the above formulae, X represents

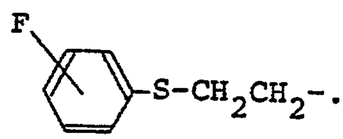

Next, the present compounds produced by this method will be shown in Table 1.

Table 1

Cyclohexane derivatives of the general formula: 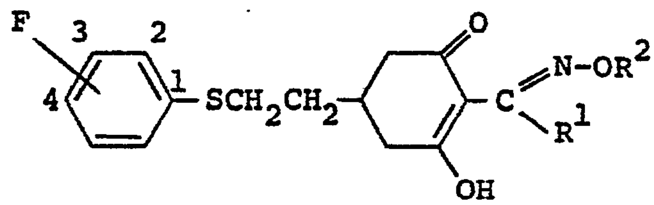

| F | $R^1$ | $R^2$ |
|---|---|---|
| 4-F | $CH_3$ | $CH_3$ |
| 4-F | $CH_3$ | $CH_2CH_3$ |
| 4-F | $CH_3$ | $CH_2CH=CH_2$ |
| 4-F | $CH_3$ | $CH_2CH=CHCH_3$ |
| 4-F | $CH_3$ | $CH_2CH=CHC\ell$ |
| 4-F | $CH_3$ | $CH_2C\equiv CH$ |
| 4-F | $CH_3$ | $CH_2OCH_3$ |
| 4-F | $CH_3$ | $CH_2SCH_3$ |
| 4-F | $C_2H_5$ | $CH_3$ |
| 4-F | $C_2H_5$ | $CH_2CH_3$ |
| 4-F | $C_2H_5$ | $CH_2CH=CH_2$ |
| 4-F | $C_2H_5$ | $CH_2CH=CHCH_3$ |
| 4-F | $C_2H_5$ | $CH_2CH=CHC\ell$ |
| 4-F | $C_2H_5$ | $CH_2C\equiv CH$ |
| 4-F | $C_2H_5$ | $CH_2OCH_3$ |
| 4-F | $C_2H_5$ | $CH_2SCH_3$ |
| 4-F | $C_2H_5$ | $CH_2CN$ |
| 4-F | $C_3H_7$ | $CH_3$ |
| 4-F | $C_3H_7$ | $CH_2CH_3$ |
| 4-F | $C_3H_7$ | $CH_2CH=CH_2$ |

- to be cont'd -

Table 1 (Cont'd)

| F | $R^1$ | $R^2$ |
|---|---|---|
| 4-F | $C_3H_7$ | $CH_2CH=CHCH_3$ |
| 4-F | $C_3H_7$ | $CH_2CH=CHCl$ |
| 4-F | $C_3H_7$ | $CH_2C\equiv CH$ |
| 4-F | $C_3H_7$ | $CH_2OCH_3$ |
| 4-F | $C_3H_7$ | $CH_2SCH_3$ |
| 4-F | $CH_2OCH_3$ | $CH_3$ |
| 4-F | $CH_2OCH_3$ | $CH_2CH_3$ |
| 4-F | $CH_2OCH_3$ | $CH_2CH=CH_2$ |
| 4-F | $CH_2OCH_3$ | $CH_2CH=CHCH_3$ |
| 4-F | $CH_2OCH_3$ | $CH_2CH=CHCl$ |
| 4-F | $CH_2OCH_3$ | $CH_2C\equiv CH$ |
| 4-F | $CH_2OCH_3$ | $CH_2OCH_3$ |
| 4-F | $CH_2OCH_3$ | $CH_2SCH_3$ |
| 4-F | H | $CH_3$ |
| 4-F | H | $CH_2CH_3$ |
| 4-F | H | $CH_2CH=CH_2$ |
| 4-F | H | $CH_2CH=CHCH_3$ |
| 4-F | H | $CH_2CH=CHCl$ |
| 4-F | H | $CH_2C\equiv CH$ |
| 4-F | H | $CH_2OCH_3$ |
| 4-F | H | $CH_2SCH_3$ |
| 3-F | $CH_3$ | $CH_3$ |
| 3-F | $CH_3$ | $CH_2CH_3$ |

- to be cont'd -

Table 1 (Cont'd)

| F | $R^1$ | $R^2$ |
|---|---|---|
| 3-F | $CH_3$ | $CH_2CH=CH_2$ |
| 3-F | $CH_3$ | $CH_2CH=CHCH_3$ |
| 3-F | $CH_3$ | $CH_2CH=CHCl$ |
| 3-F | $CH_3$ | $CH_2C\equiv CH$ |
| 3-F | $CH_3$ | $CH_2OCH_3$ |
| 3-F | $CH_3$ | $CH_2SCH_3$ |
| 3-F | $C_2H_5$ | $CH_3$ |
| 3-F | $C_2H_5$ | $CH_2CH_3$ |
| 3-F | $C_2H_5$ | $CH_2CH=CH_2$ |
| 3-F | $C_2H_5$ | $CH_2CH=CHCH_3$ |
| 3-F | $C_2H_5$ | $CH_2CH=CHCl$ |
| 3-F | $C_2H_5$ | $CH_2C\equiv CH$ |
| 3-F | $C_2H_5$ | $CH_2OCH_3$ |
| 3-F | $C_2H_5$ | $CH_2SCH_3$ |
| 3-F | $C_2H_5$ | $CH_2CN$ |
| 3-F | $C_3H_7$ | $CH_3$ |
| 3-F | $C_3H_7$ | $CH_2CH_3$ |
| 3-F | $C_3H_7$ | $CH_2CH=CH_2$ |
| 3-F | $C_3H_7$ | $CH_2CH=CHCH_3$ |
| 3-F | $C_3H_7$ | $CH_2CH=CHCl$ |
| 3-F | $C_3H_7$ | $CH_2C\equiv CH$ |
| 3-F | $C_3H_7$ | $CH_2OCH_3$ |

- to be cont'd -

Table 1 (Cont'd)

| F | $R^1$ | $R^2$ |
|---|---|---|
| 3-F | $C_3H_7$ | $CH_2SCH_3$ |
| 3-F | $CH_2OCH_3$ | $CH_3$ |
| 3-F | $CH_2OCH_3$ | $CH_2CH_3$ |
| 3-F | $CH_2OCH_3$ | CH2CH=CH2 |
| 3-F | $CH_2OCH_3$ | $CH_2CH{=}CHCH_3$ |
| 3-F | $CH_2OCH_3$ | $CH_2CH{=}CHC\ell$ |
| 3-F | $CH_2OCH_3$ | $CH_2C{\equiv}CH$ |
| 3-F | $CH_2OCH_3$ | $CH_2OCH_3$ |
| 3-F | $CH_2OCH_3$ | $CH_2SCH_3$ |
| 3-F | H | $CH_3$ |
| 3-F | H | $CH_2CH_3$ |
| 3-F | H | $CH_2CH{=}CH_2$ |
| 3-F | H | $CH_2CH{=}CHCH_3$ |
| 3-F | H | $CH_2CH{=}CHC\ell$ |
| 3-F | H | $CH_2C{\equiv}CH$ |
| 3-F | H | $CH_2OCH_3$ |
| 3-F | H | $CH_2SCH_3$ |
| 2-F | $CH_3$ | $CH_3$ |
| 2-F | $CH_3$ | $CH_2CH_3$ |
| 2-F | $CH_3$ | $CH_2CH{=}CH_2$ |
| 2-F | $CH_3$ | $CH_2CH{=}CHCH_3$ |
| 2-F | $CH_3$ | $CH_2CH{=}CHC\ell$ |
| 2-F | $CH_3$ | $CH_2C{\equiv}CH$ |

- to be cont'd -

Table 1 (Cont'd)

| F | $R^1$ | $R^2$ |
|---|---|---|
| 2-F | $CH_3$ | $CH_2OCH_3$ |
| 2-F | $CH_3$ | $CH_2SCH_3$ |
| 2-F | $C_2H_5$ | $CH_3$ |
| 2-F | $C_2H_5$ | $CH_2CH_3$ |
| 2-F | $C_2H_5$ | $CH_2CH=CH_2$ |
| 2-F | $C_2H_5$ | $CH_2CH=CHCH_3$ |
| 2-F | $C_2H_5$ | $CH_2CH=CHC\ell$ |
| 2-F | $C_2H_5$ | $CH_2C\equiv CH$ |
| 2-F | $C_2H_5$ | $CH_2OCH_3$ |
| 2-F | $C_2H_5$ | $CH_2SCH_3$ |
| 2-F | $C_2H_5$ | $CH_2CN$ |
| 2-F | $C_3H_7$ | $CH_3$ |
| 2-F | $C_3H_7$ | $CH_2CH_3$ |
| 2-F | $C_3H_7$ | $CH_2CH=CH_2$ |
| 2-F | $C_3H_7$ | $CH_2CH=CHCH_3$ |
| 2-F | $C_3H_7$ | $CH_2CH=CHC\ell$ |
| 2-F | $C_3H_7$ | $CH_2C\equiv CH$ |
| 2-F | $C_3H_7$ | $CH_2OCH_3$ |
| 2-F | $C_3H_7$ | $CH_2SCH_3$ |
| 2-F | $CH_2OCH3$ | $CH_3$ |
| 2-F | $CH_2OCH_3$ | $CH_2CH_3$ |
| 2-F | $CH_2OCH_3$ | $CH_2CH=CH_2$ |

- to be cont'd -

Table 1 (Cont'd)

| F | $R^1$ | $R^2$ |
|---|---|---|
| 2-F | $CH_2OCH_3$ | $CH_2CH=CHCH_3$ |
| 2-F | $CH_2OCH_3$ | $CH_2CH=CHCl$ |
| 2-F | $CH_2OCH_3$ | $CH_2C\equiv CH$ |
| 2-F | $CH_2OCH_3$ | $CH_2OCH_3$ |
| 2-F | $CH_2OCH_3$ | $CH_2SCH_3$ |
| 2-F | H | $CH_3$ |
| 2-F | H | $CH_2CH_3$ |
| 2-F | H | $CH_2CH=CH_2$ |
| 2-F | H | $CH_2CH=CHCH_3$ |
| 2-F | H | $CH_2CH=CHCl$ |
| 2-F | H | $CH_2C\equiv CH$ |
| 2-F | H | $CH_2OCH_3$ |
| 2-F | H | $CH_2SCH_3$ |

The present compounds represented by the foregoing general formula (I) form salts such as metal salts, ammonium salts, etc., and these salts also have a herbicidal activity.

The metal salts include potassium salts, sodium salts, lithium salts, calcium salts, copper salts, magnesium salts, etc. Of these salts, the potassium and sodium salts can be obtained by reacting the compounds of the general formula (I) with potassium hydroxide or sodium hydroxide in a solvent such as water, acetone, alcohol, etc. by heating if necessary, and other metal salts can be obtained by reacting the resulting potassium salt or sodium salt with the chloride, hydroxide, sulfate, nitrate, etc. of the required metal.

Also, the ammonium salt can be obtained by reacting the compounds of the general formula (I) with quaternary ammonium hydroxide in a solvent such as water, acetone, alcohol, etc. Examples of the ammonium salt include organic ammonium salts such as the tetrapropylammonium salt, benzyltrimethyl-ammonium salt , etc.

A method to produce the present compounds will be explained specifically with reference to the following production examples.

Production example 1

Production of the present compound (5)

0.30 Gram of 2-propionyl-5-[2-(4-fluorophenylthio)ethyl]cyclohexane-1,3-dione and 0.15 g of crotyloxyamine hydrochloride were dissolved in 10 ml of ethanol, and after adding 0.12 g of triethylamine, the resulting solution was stirred overnight at room temperature. The reaction solution was poured into water, acidified with dilute hydrochloric acid and extracted with chloroform. The solvent was removed, and the residue obtained was purified by thin layer chromatography (developing solvent, ethyl acetate:hexane=1:3) to obtain 0.21 g of 2-(1-crotyloxyaminopropylidene)-5-[2-(4-fluorophenylthio) ethyl]cyclohexane-1,3-dione.
$n_D^{20}$ 1.5616
Nuclear magnetic resonance spectrum ($CDCl_3$):
δ (ppm) 14.67 (lH, s), 7.48-6.83 (4H, m), 6.18-5.36 (2H, m), 4.46 (2H, d), 2.8 (2H, t), 2.9-1.4 (9H, m), 1.74 (3H, d), 1.12 (3H, t).

Production example 2

Production of the present compound (15)

0.16 Gram of 2-propionyl-5-[2-(3-fluorophenylthio)ethyl]cyclohexane-1,3-dione and 0.08 g of allyloxyamine hydrochloride were dissolved in 5 ml of ethanol, and after adding 0.08 g of triethylamine, the resulting solution was stirred overnight at room temperature. The reaction solution was poured into water, acidified with dilute hydrochloric acid and extracted with chloroform. The solvent was removed, and the residue obtained was purified by thin layer chromatography (developing solvent, hexane:ethyl acetate = 10:1) to obtain 0.13 g of 2-(1-allyloxyaminopropylidene)-5-[2-(3-fluorophenylthio)ethyl]cyclohexane-1,3-dione.
$n_D^{22.5}$ 1.5649
Nuclear magnetic resonance spectrum ($CDCl_3$):
δ (ppm) 14.61 (1H, bs), 7.4-6.8 (4H, m), 6.34-5.81 (1H, m), 5.44 (2H, bd), 5.23 (1H, m), 4.54 (2H, d), 2.99 (2H, t), 3.0-1.5 (9H, m), 1.13 (3H, t).

Some of the present compounds produced by this method will be shown in Table 2.

Table 2

Cyclohexane derivatives of the general formula:

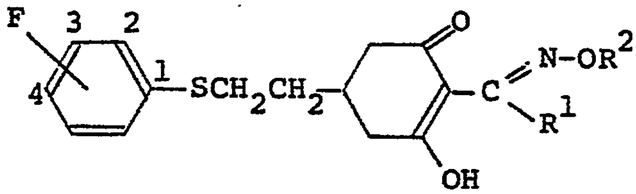

| Compound No. | F | $R^1$ | $R^2$ | Physical property |
|---|---|---|---|---|
| 1 | 4-F | $C_2H_5$ | $CH_3$ | $n_D^{19}$ 1.5603 |
| 2 | 4-F | $C_2H_5$ | $CH_2CH_3$ | $n_D^{19}$ 1.5506 |
| 3 | 4-F | $C_2H_5$ | $CH_2CH=CH_2$ | $n_D^{19}$ 1.5613 |
| 4 | 4-F | $C_2H_5$ | $CH_2CH=CHC\ell$ | $n_D^{20}$ 1.5605 |
| 5 | 4-F | $C_2H_5$ | $CH_2CH=CHCH_3$ | $n_D^{20}$ 1.5616 |
| 6 | 4-F | $C_2H_5$ | $CH_2CN$ | $n_D^{19}$ 1.5452 |
| 7 | 4-F | $C_3H_7$ | $CH_2CH_3$ | $n_D^{22}$ 1.5581 |
| 8 | 4-F | $C_3H_7$ | $CH_2CH=CH_2$ | $n_D^{22}$ 1.5512 |
| 9 | 4-F | $C_3H_7$ | $CH_2CH=CHC\ell$ | $n_D^{20}$ 1.5552 |
| 10 | 4-F | $CH_2OCH_3$ | $CH_2CH_3$ | $n_D^{20}$ 1.5456 |
| 11 | 4-F | $CH_2OCH_3$ | $CH_2CH=CH_2$ | $n_D^{20}$ 1.5548 |
| 12 | 4-F | $C_3H_7$ | $CH_2CN$ | $n_D^{20}$ 1.5421 |
| 13 | 2-F | $C_2H_5$ | $CH_2CH=CH_2$ | $n_D^{22.0}$ 1.5634 |
| 14 | 2-F | $C_3H_7$ | $CH_2CH=CH_2$ | $n_D^{22.0}$ 1.5542 |
| 15 | 3-F | $C_2H_5$ | $CH_2CH=CH_2$ | $n_D^{22.5}$ 1.5649 |
| 16 | 3-F | $C_3H_7$ | $CH_2CH=CH_2$ | $n_D^{22.5}$ 1.5594 |

- to be cont'd -

Table 2 (Cont'd)

| Compound No. | F | $R^1$ | $R^2$ | Physical property |
|---|---|---|---|---|
| 17 | 4-F | $CH_3$ | $CH_2CH_3$ | $n_D^{22}$ 1.5697 |
| 18 | 4-F | $CH_3$ | $CH_2CH=CH_2$ | $n_D^{22}$ 1.5681 |
| 19 | 4-F | $CH_3$ | $CH_2CH_2CH_3$ | $n_D^{22}$ 1.5622 |
| 20 | 4-F | $CH_3$ | $CH_2CH=CHCl$ | $n_D^{22}$ 1.5795 |
| 21 | 4-F | $CH_3$ | $CH_2CH=CHCH_3$ | $n_D^{22}$ 1.5064 |
| 22* | 4-F | $C_2H_5$ | $CH_2CH_3$ | m.p. 150-155°C (dec.) |
| 23** | 4-F | $C_2H_5$ | $CH_2CH_2CH_3$ | m.p. 89-93°C |

* Sodium salt

** Tetrapropylammonium salt hydrate

The acylcyclohexane derivatives represented by the general formula (II), which may be used as starting materials in methods embodying the invention, are produced, for example, by a series of reactions described below.

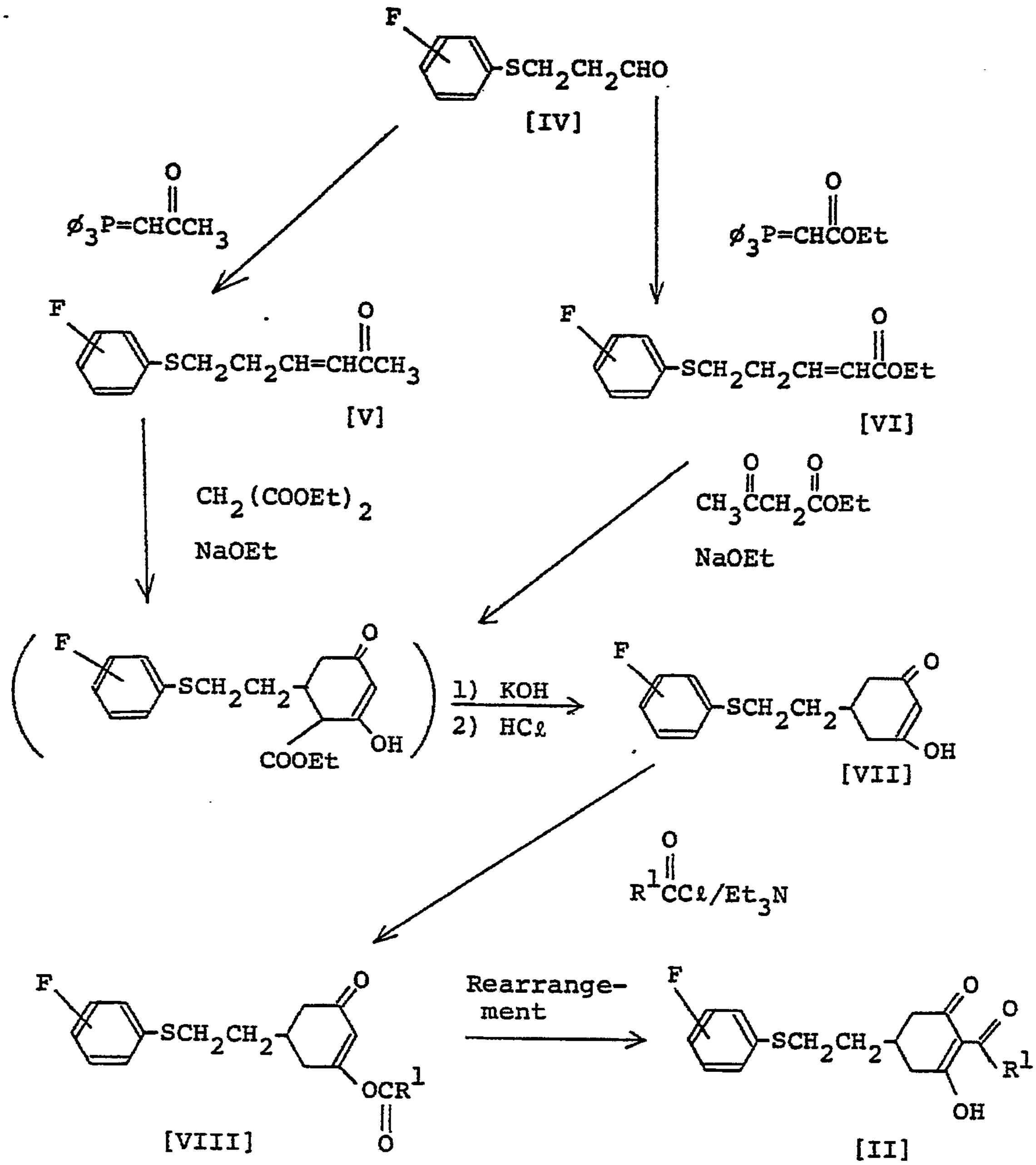


In the above formulae, $R^1$ represents the same meaning as described above.

Referring to the above reaction process in detail, the desired compound (II) is obtained by converting the aldehyde compound (IV), obtained by the reaction of fluorothiophenol with acrolein, to the α,B-unsaturated ketone (V) by Wittig reaction; converting the compound (V) to the compound (VII) through the steps of cyclization of the compound (V) by reaction with a malonic acid ester in the presence of a base, hydrolysis and decarboxylation; and converting the compound (VII) to the compound (II) through the steps of acrylation of the compound (VII) by the usual method and rearrangement in the presence of 4-dimethylaminopyridine or Lewis acid.

The compound (VII) can also be obtained from the aldehyde compound (IV) through the steps of conversion of the compound (IV) to the compound (VI) by Wittig reaction, cyclization by reaction with acetoacetic acid ester, hydrolysis and decarboxylation.

When the present compounds are used as an active ingredient for herbicides, they are generally formulated into herbicidal compositions containing carriers and/or diluents, for example,emulsifiable concentrates, wettable powders, suspension formulations, granules, etc. by mixing with, for example, solid carriers, liquid carriers, surfaces active agents and other auxiliaries for formulation.

. These preparations may contain as an active ingredient from 0.1 to 90% by weight, preferably from 0.2 to 80% by weight, more preferably from 1 to 80% by weight of the present compounds.

The solid carriers include fine powders or granules of kaolin clay, attapulgite clay, bentonite, terra abla, pyrophyllite, talc, diatomaceous earth, calcite, walnut powder, urea, ammonium sulfate, synthetic hydrated silicon dioxide, etc. The liquid carriers include aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton seed oil), dimethyl sulfoxide, N,N-dimethylformamide, acetonitrile, water, etc.

The surface active agents used for emulsification, dispersion, wetting, etc. include anionic surface active agents such as the salt of alkyl sulfates, alkylsulfonates, alkylarylsulfonates, dialkyl sulfosuccinates, the salt of polyoxyethylene alkylaryl ether phosphoric acid ester, etc., and nonionic surface active agents such as polyoxyethylene alkyl ether, polyoxyethylene alkylaryl ether, polyoxyethylene polyoxypropylene block copolymer, sorbitan fatty acid esters, polyoxyethylene, sorbitan monooleate, etc.

The auxiliaries for formulation include lignosulfonates, alginates, polyvinyl alcohol, gum arabic, CMC (carboxymethyl cellulose), PAP (isopropyl acid phosphate), etc.

Next, formulation examples will be shown. The present compounds are shown by Compound No. in Table 2. Parts in the examples are by weight.

Formulation example 1

Fifty parts of the present compound (5), 3 parts of calcium lignosulfonate, 2 parts of sodium lauryl sulfate and 45 parts of synthetic hydrated silicon dioxide are well pulverized and mixed together to obtain a wettable powder.

Formulation example 2

Ten parts of each of the present compounds (1) to (23), 14 parts of polyoxyethylene styrylphenyl ether, 6 parts of calcium dodecylbenzenesulfonate, 30 parts of xylene and 40 parts of cyclohexanone are well mixed to obtain an emulsifiable concentrate of each compound.

Formulation example 3

One part of each of the present compounds (7) and (16), 1 part of synthetic hydrated silicon dioxide, 2 parts of calcium lignosulfonate, 31 parts of bentonite and 65 parts of kaolin clay are well pulverized and mixed together, well kneaded with water, granulated and dried to obtain a granule of each compound.

Formulation example 4

Twenty-five parts of the present compound (16), 3 parts of polyoxyethylene sorbitan monooleate, 3 parts of CMC and 69 parts of water are mixed and wet-pulverized until the particle size is reduced to 5 microns or less to obtain a suspension formulation.

Formulation example 5

Twenty parts of the present compound (1), 10 parts of synthetic hydrated silicon dioxide, 3 parts of alkyl sulfate, 2 parts of calcium lignosulfonate and 65 parts of diatomaceous earth are well pulverized and mixed together to obtain a wettable powder.

Formulation example 6

Two parts of the present compound (9), 1 part of polyoxyethylene sorbitan monooleate, 5 parts of polyvinyl alcohol and 92 parts of water are mixed and wet-pulverized until the particle size is reduced to 5 microns or less to obtain a suspension formulation.

Formulation example 7

Twenty parts of each of the present compounds (2), (3), (6), (8) and (21), 14 parts of polyoxyethylene styrylphenyl ether, 6 parts of calcium dodecylbenzenesulfonate, 30 parts of xylene and 30 parts of isophorone are well mixed to obtain an emulsifiable concentrate of each compound.

Generally, the present compounds are formulated and used in soil treatment, foliage treatment or treatment under flooded condition before or after the emergence of weeds. The soil treatment includes soil surface treatment, soil incorporation treatment, etc., and the foliage treatment includes, in addition to the treatment of plants over the top, directed treatment wherein herbicides are applied to weeds only so as not to attach to crops.

Further, the present compounds can be used as a herbicide for paddy fields, plow fields, orchards, pastures, turfs, forests, non-crop lands, etc., and also an increase in herbicidal activity can be expected by using them in mixture with other herbicides. In addition, they can be used in mixture with insecticides, acaricides, nematocides, fungicides, plant growth regulators, fertilizers, soil improvers, etc.

When the present compounds are used as an active ingredient for herbicides, their dosage rate varies with weather conditions, preparation forms, when, how and where the treatments are applied, weeds and crops aimed at, etc., but it is generally from 0.05 to 200 g/are, preferably from 0.1 to 100 g/are. Particularly, the dosage rate generally employed is from 0.6 to 10 g/are for soil treatment in plow field, from 0.3 to 4 g/are for foliage treatment in plow field, from 0.1 to 4 g/are for treatment in paddy field and from 10 to 100 g/are for treatment in non-crop land and orchard. In the case of emulsifiable concentrates, wettable powders, suspension formulations, etc., their prescribed amount is generally diluted with water of from 1 to 10 liters/are (if necessary, auxiliaries such as spreading agents are added). Granules, etc. are generally used as such without dilution.

The spreading agents include, in addition to the foregoing surface active agents, polyoxyethylene resin acid (ester), lignosulfonates, abietates, dinaphthylmethanedisulfonates, paraffin, etc.

Next, the usefulness of the present compounds as an active ingredient for herbicides will be illustrated with reference to the following test examples. In the test examples, the present compounds are shown by Compound No. in Table 2, and compounds used as a control are shown by Compound symbol in Table 3.

Table 3

| Compound symbol | Structural formula | Remark |
|---|---|---|
| A | 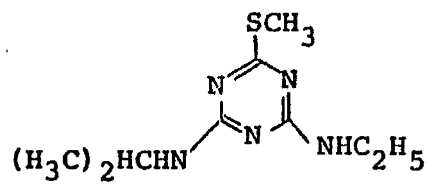 | Atrazine |
| B | 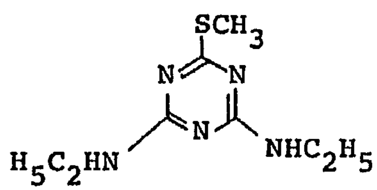 | Simetryn |
| C | 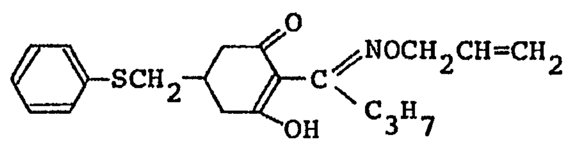 | Compound described in Japanese Patent Publication Kokai (Laid-open) No. 46749/1979. |
| D | 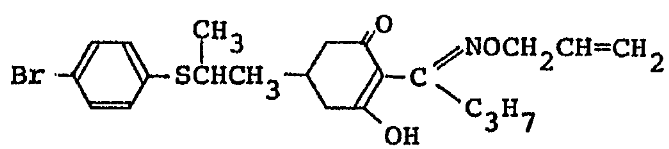 | Compound described in Japanese Patent Publication Kokai (Laid-open) No. 115349/1979. |
| E | 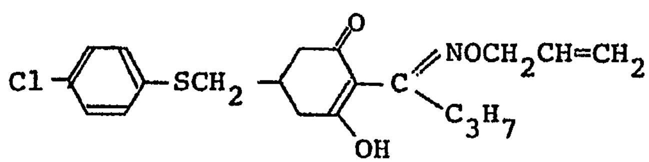 | Compound described in Japanese Patent Publication Kokai (Laid-open) No. 115349/1979. |

The herbicidal activity was evaluated as follows: The degree of inhibition of the emergence and growth of test plants at the time of examination was observed with the naked eye and evaluated in six stages, 0, 1, 2, 3, 4, 5. In the above stages, "0" means there being little or no difference in the degree of inhibition between the treated test plants and untreated ones; "5" means the death of the test plants or complete inhibition of growth thereof; and the degree of inhibition between "0" and "5" is expressed by four stages, 1, 2, 3 and 4.

Test example 1

Soil treatment test in plow field

Plow-field soil was filled in a cylindrical plastic pot (diameter, 10 cm; depth, 10 cm), and the seeds of Japanese millet and oat were sowed and covered with the soil. The prescribed amount of the emulsifiable concentrates of the test compounds prepared according to Formulation example 2 was diluted with water of an amount corresponding to 10 liters/are, and applied to the soil surface by means of a small-sized sprayer. After treatment, the test plants were cultivated for 20 days in a greenhouse to examine the herbicidal activity. The results are shown in Table 4.

Table 4

| Test compound | Dosage rate of active ingredient (g/a) | Herbicidal activity | |
|---|---|---|---|
| | | Japanese millet | Oat |
| 1 | 40 | 5 | 5 |
| 2 | 40 | 5 | 5 |
| 3 | 40 | 5 | 5 |
| 4 | 40 | 5 | 5 |
| 5 | 40 | 5 | 5 |
| 7 | 40 | 5 | 5 |
| 8 | 40 | 5 | 5 |
| 9 | 40 | 5 | 5 |
| 10 | 40 | 5 | 5 |
| 11 | 40 | 5 | 5 |
| 13 | 40 | 5 | 5 |
| 14 | 40 | 5 | 5 |
| 15 | 40 | 5 | 5 |
| 16 | 40 | 5 | 5 |
| 17 | 40 | 5 | 5 |
| 18 | 40 | 5 | 5 |
| 19 | 40 | 5 | 5 |
| 20 | 40 | 5 | 5 |
| 21 | 40 | 5 | 5 |
| 22 | 40 | 5 | 5 |
| 23 | 40 | 5 | 5 |

Test example 2

Foliage treatment test in plow field

Plow-field soil was filled in a cylindrical plastic pot (diameter, 10 cm; depth, 10 cm), and the seeds of Japanese millet and oat were sowed and cultivated for 10 days in a greenhouse. Thereafter, the prescribed amount of the emulsifiable concentrates of the test compounds prepared according to Formulation example 2 was diluted with a spreading agent-containing water of an amount corresponding to 10 liters/are, and foliage-applied to the test plants over the top by means of a small-sized sprayer. After treatment, the test plants were cultivated for 20 days in a greenhouse to examine the herbicieal activity. The results are shown in Table 5.

Table 5

| Test Compound | Dosage rate of active ingredient (g/a) | Herbicidal activity | |
|---|---|---|---|
| | | Japanese millet | Oat |
| 1 | 40 | 5 | 5 |
| 2 | 40 | 5 | 5 |
| 3 | 40 | 5 | 5 |
| 4 | 40 | 5 | 5 |
| 5 | 40 | 5 | 5 |
| 7 | 40 | 5 | 5 |
| 8 | 40 | 5 | 5 |
| 9 | 40 | 5 | 5 |
| 10 | 40 | 5 | 5 |
| 11 | 40 | 5 | 5 |
| 13 | 40 | 5 | 5 |
| 14 | 40 | 5 | 5 |
| 15 | 40 | 5 | 5 |
| 16 | 40 | 5 | 5 |
| 17 | 40 | 5 | 5 |
| 18 | 40 | 5 | 5 |
| 19 | 40 | 5 | 5 |
| 20 | 40 | 5 | 5 |
| 21 | 40 | 5 | 5 |
| 22 | 40 | 5 | 5 |
| 23 | 40 | 5 | 5 |

Test example 3

Treatment test under flooded condition in paddy field

Paddy-field soil was filled in a cylindrical plastic pot (diameter, 8 cm; depth, 12 cm), and the seeds of barnyardgrass were incorporated from 1 to 2 cm deep in the soil. After creating the state of paddy field by flooding, rice seedlings in a 2-leaf stage were transplanted and cultivated in a greenhouse. After 6 days (initial stage of emergence of weeds), the prescribed amount of the emulsifiable concentrates of the test compounds prepared according to Formulation example 2 was diluted with 5 ml of water, and applied to the water surface. After treatment, the test plants were cultivated for 20 days in a greenhouse to examine the herbicidal activity. The results are shown in Table 6.

Table 6

| Test compound | Dosage rate of active ingredient (g/a) | Herbicidal activity |
|---|---|---|
| | | Barnyardgrass |
| 1 | 40 | 5 |
| 2 | 40 | 5 |
| 3 | 40 | 5 |
| 4 | 40 | 5 |
| 5 | 40 | 5 |
| 7 | 40 | 5 |
| 8 | 40 | 5 |
| 9 | 40 | 5 |
| 10 | 40 | 5 |
| 11 | 40 | 5 |
| 13 | 40 | 5 |
| 14 | 40 | 5 |
| 15 | 40 | 5 |
| 16 | 40 | 5 |
| 17 | 40 | 5 |
| 18 | 40 | 5 |
| 19 | 40 | 5 |
| 20 | 40 | 5 |
| 21 | 40 | 5 |
| 22 | 40 | 5 |
| 23 | 40 | 5 |

Test example 4

Foliage treatment test in plow field

Plow-field soil was filled in a cylindrical plastic pot (diameter, 10 cm; depth, 10 cm), and the seeds of radish and velvetleaf were sowed and cultivated for 10 days in a greenhouse. Thereafter, the prescribed amount of the emulsifiable concentrates of the test compounds prepared according to Formulation example 2 was diluted with a spreading agent-containing water of an amount corresponding to 10 liters/are, and foliage-applied to the test plants over the top by means of a small-sized sprayer. After treatment, the test plants were cultivated for 20 days in a greenhouse to examine the herbicidal activity. The results are shown in Table 7.

Table 7

| Test compound | Dosage rate of active ingredient (g/a) | Herbicidal activity | |
|---|---|---|---|
| | | Radish | Velvetleaf |
| 2 | 20 | 5 | - |
| 4 | 20 | 5 | - |
| 5 | 20 | 4 | 4 |
| 9 | 20 | 4 | - |
| 14 | 20 | 4 | - |
| 15 | 20 | 5 | - |
| 17 | 20 | 5 | 5 |
| 18 | 20 | 5 | 5 |
| 20 | 20 | 5 | 5 |
| 21 | 20 | 5 | 5 |
| D | 20 | 2 | 0 |
| E | 20 | 0 | 0 |

Test example 5

Soil treatment test in plow field

Plow-field soil was filled in a vat (area, 33 × 23 cm²; depth, 11 cm), and the seeds of soybean, cotton, barnyardgrass, Johnsongrass and green foxtail were sowed and covered from 1 to 2 cm deep with the soil. The prescribed amount of the emulsifiable concentrates of the test compounds prepared according to Formulation example 2 was diluted with water of an amount corresponding to 10 liters/are, and applied to the soil surface by means of a small-sized sprayer. After treatment, the test plants were cultivated for 20 days in a greenhouse to examine the herbicidal activity. The results are shown in Table 8.

Table 8

| Test compound | Dosage rate of active ingredient (g/a) | Herbicidal activity | | | | |
|---|---|---|---|---|---|---|
| | | Soybean | Cotton | Barnyardgrass | Johnsongrass | Green foxtail |
| 2 | 2.5 | 0 | 0 | 4 | 4 | 4 |
| 5 | 2.5 | 0 | 0 | 5 | 5 | 5 |
| | 0.63 | 0 | 0 | 4 | 3 | 4 |
| 8 | 2.5 | 0 | 0 | 5 | 4 | 5 |
| 15 | 2.5 | 0 | 0 | 5 | 4 | 4 |
| 18 | 2.5 | 0 | 0 | 4 | 5 | – |
| 21 | 2.5 | 0 | 0 | 5 | 4 | 5 |
| A | 2.5 | 0 | 0 | 0 | 0 | 0 |
| | 0.63 | 0 | 0 | 0 | 0 | 0 |
| C | 2.5 | 0 | 0 | 0 | 2 | 2 |
| | 0.63 | 0 | 0 | 0 | 0 | 0 |
| D | 2.5 | 0 | 0 | 4 | 0 | 4 |
| | 0.63 | 0 | 0 | 1 | 0 | 0 |
| E | 2.5 | 0 | 0 | 3 | 0 | 2 |
| | 0.63 | 0 | 0 | 0 | 0 | 0 |

Test example 6

Soil treatment test in plow field

Plow-field soil was filled in a vat (area, 33 × 23 $cm^2$; depth, 11 cm), and the seeds of corn, barnyardgrass, Johnsongrass, green foxtail, fall panicum and large crabgrass were sowed and covered from 1 to 2 cm deep with the soil. The prescribed amount of the emulsifiable concentrates of the test compounds prepared according to Formulation example 2 was diluted with water of an amount corresponding to 10 liters/are, and applied to the soil surface by means of a small-sized sprayer. After treatment, the test plants were cultivated for 20 days in a greenhouse to examine the herbicidal activity. The results are shown in Table 9.

Table 9

| Test compound | Dosage rate of active ingredient (g/a) | Herbicidal activity | | | | | |
|---|---|---|---|---|---|---|---|
| | | Corn | Barnyard-grass | Johson-grass | Green foxtail | Fall panicum | Large crabgrass |
| 17 | 2.5 | 0 | 5 | - | - | 5 | 5 |
| 18 | 2.5 | 0 | 4 | 5 | - | 5 | 5 |
| 20 | 2.5 | 0 | - | - | 5 | 5 | 5 |
| 21 | 2.5 | 1 | 5 | 4 | 5 | 5 | 5 |
| A | 2.5 | 0 | 0 | 0 | 0 | 0 | 0 |

Test example 7

Soil treatment test in plow field

Plow-field soil was filled in a vat (area, 33 × 23 $cm^2$; depth, 11 cm), and the seeds of wheat, wild oat, blackgrass, quackgrass and green foxtail were sowed and covered from 1 to 2 cm deep with the soil. The prescribed amount of the emulsifiable concentrates of the test compounds prepared according to Formulation example 2 was diluted with water of an amount corresponding to 10 liters/are, and applied to the soil surface by means of a small-sized sprayer. After treatment, the test plants were cultivated for 28 days in a greenhouse to examine the herbicidal activity. The results are shown in Table 10.

Table 10

| Test compound | Dosage rate of active ingredient (g/a) | Herbicidal activity | | | | |
|---|---|---|---|---|---|---|
| | | Wheat | Green foxtail | Wild oat | Blackgrass | Quackgrass |
| 1 | 0.64 | 1 | 4 | 3 | 5 | 4 |
| 3 | 0.64 | 1 | 5 | 4 | 5 | 4 |
| 4 | 0.64 | 0 | 5 | 4 | 4 | 5 |
| 5 | 0.64 | 1 | 5 | 3 | 5 | 4 |
| 7 | 0.64 | 1 | 5 | 4 | 5 | - |
| 13 | 0.64 | 0 | 4 | - | 5 | 5 |
| 16 | 0.64 | 0 | 5 | 3 | 5 | 5 |
| C | 0.64 | 0 | 0 | 0 | 0 | 0 |
| D | 0.64 | 0 | 0 | 0 | 0 | 0 |
| E | 0.64 | 0 | 0 | 0 | 0 | 0 |

Test example 8

Foliage treatment test in plow field

Plow-field soil was filled in a vat (area, 33 × 23 $cm^2$; depth, 11 cm), and the seeds of soybean, cotton, barnyardgrass, large crabgrass, Johnsongrass, green foxtail, oat, annual bluegrass and blackgrass were sowed and cultivated for 18 days. Thereafter, the prescribed amount of the emulsifiable concentrates of the test compounds prepared according to Formulation example 2 was diluted with a spreading agent-containing water of an amount corresponding to 5 liters/are, and uniformly applied to the entire foliage of the test plants over the top by means of a small-sized sprayer. The state of growth of the weeds and crops at that time varied with the kind thereof, but they were in a cotyledonous stage to 3-leaf stage and from 5 to 19 cm in height. Twenty days after treatment, the herbicidal activity was examined. The results are shown in Table 11. These tests were carried out in a greenhouse through the entire period of test.

Table 11

| Test compound | Dosage rate of active ingredient (g/a) | Herbicidal activity | | | |
|---|---|---|---|---|---|
| | | Soy-bean | Cotton | Barnyard-grass | Large crabgrass |
| 1 | 2.5 | 0 | 0 | 5 | 4 |
| | 0.63 | 0 | 0 | 4 | 4 |
| 2 | 2.5 | 0 | 0 | 5 | 5 |
| | 0.63 | 0 | 0 | 5 | 4 |
| 3 | 2.5 | - | 0 | 5 | 5 |
| | 0.63 | 0 | 0 | 4 | 3 |
| 4 | 2.5 | - | 0 | 5 | 5 |
| | 0.63 | 0 | 0 | 5 | 4 |
| 5 | 2.5 | - | 0 | 5 | 5 |
| | 0.63 | 0 | 0 | 5 | 4 |
| 7 | 2.5 | 0 | 0 | 5 | 4 |
| | 0.63 | 0 | 0 | 5 | 3 |
| 8 | 2.5 | 0 | 0 | 5 | 5 |
| | 0.63 | 0 | 0 | 5 | 4 |
| 9 | 2.5 | 0 | 0 | 5 | - |
| 10 | 2.5 | 0 | 0 | 5 | 4 |
| | 0.63 | 0 | 0 | 4 | 4 |
| 11 | 2.5 | 0 | 0 | 5 | 4 |
| 13 | 2.5 | 0 | 0 | 5 | - |
| 14 | 2.5 | 0 | 0 | 5 | - |
| 15 | 2.5 | 0 | 0 | 5 | 4 |
| | 0.63 | 0 | 0 | 5 | - |

- to be cont'd -

Table 11 (Cont'd)

| Johnson-grass | Green foxtail | Oat | Annual bluegrass | Black-grass |
|---|---|---|---|---|
| 4 | 4 | 4 | - | 4 |
| 4 | 4 | 4 | - | 4 |
| 5 | 5 | 5 | - | 5 |
| 4 | 4 | 4 | - | 4 |
| 5 | 5 | 5 | 4 | 5 |
| 3 | 5 | 5 | 3 | 4 |
| 4 | 5 | 4 | - | 5 |
| 3 | 4 | 4 | - | - |
| 5 | 5 | 5 | - | 4 |
| 3 | 4 | 4 | - | 3 |
| 5 | 5 | 5 | - | 5 |
| 4 | 5 | 4 | - | 4 |
| 5 | 5 | 5 | 5 | - |
| 4 | 4 | 4 | - | - |
| 4 | 4 | - | - | 4 |
| 4 | 4 | 5 | - | 4 |
| 3 | 3 | - | - | - |
| 5 | 4 | 4 | - | - |
| 4 | 4 | 4 | - | 4 |
| - | 4 | 4 | - | 5 |
| 4 | 4 | 5 | 4 | 4 |
| - | 4 | 5 | - | 3 |

- to be cont'd -

Table 11 (Cont'd)

| Test compound | Dosage rate of active ingredient (g/a) | Herbicidal activity | | | |
|---|---|---|---|---|---|
| | | Soy-bean | Cotton | Barnyard-grass | Large crabgrass |
| 16 | 2.5 | 0 | 0 | 5 | 4 |
| | 0.63 | 0 | 0 | 5 | - |
| 17 | 0.63 | - | 1 | 5 | 4 |
| 18 | 0.63 | - | 0 | 5 | 4 |
| 19 | 2.5 | 1 | 0 | 5 | 4 |
| 21 | 0.63 | 0 | - | 5 | 5 |
| A | 2.5 | - | - | 1 | 0 |
| | 0.63 | - | - | 0 | 0 |
| C | 2.5 | 0 | 0 | 4 | 0 |
| | 0.63 | 0 | 0 | 3 | 0 |
| D | 2.5 | 0 | 0 | 4 | 0 |
| | 0.63 | 0 | 0 | 4 | 0 |
| E | 2.5 | 0 | 0 | 4 | 2 |
| | 0.63 | 0 | 0 | 3 | 0 |

- to be cont'd -

Table 11 (Cont'd)

| Johnson-grass | Green foxtail | Oat | Annual bluegrass | Black-grass |
|---|---|---|---|---|
| 5 | 5 | 5 | - | 5 |
| 3 | 4 | 4 | - | 4 |
| 4 | 5 | 4 | 3 | - |
| 4 | 5 | - | 4 | - |
| - | 5 | 4 | 4 | - |
| 4 | 5 | 4 | 3 | - |
| 0 | 0 | 0 | 0 | 0 |
| 0 | 0 | 0 | 0 | 0 |
| 2 | 3 | - | - | - |
| 0 | 1 | - | - | - |
| 3 | 3 | 3 | 0 | - |
| 1 | 3 | 3 | 0 | - |
| 3 | 4 | 4 | 3 | - |
| 0 | 2 | 0 | 0 | - |

Test example 9

Treatment test under flooded condition in paddy field

Paddy-field soil was filled in 1/5000 areas Wagner's pots, and the seeds of barnyardgrass were incorporated from 1 to 2 cm deep in the soil. After creating the state of paddy field by flooding, rice seedlings in a 3-leaf stage were transplanted and cultivated in a greenhouse. After 4 days, the prescribed amount of the emulsifiable concentrâtes of the test compounds prepared according to Formulation example 2 was diluted with 10 ml of water and applied to the water surface, and the depth of water was made 4 cm. After treatment, the test plants were cultivated for 20 days in a greenhouse to examine the herbicidal activity. The results are shown in Table 12. In this test, water leakage corresponding to a water-level of 3 cm/day was carried out for 2 days from the day subsequent to the treatment.

Table 12

| Test compound | Dosage rate of active ingredient (g/a) | Herbicidal activity | |
|---|---|---|---|
| | | Rice plant | Barnyardgrass |
| 2 | 0.32 | 0 | 5 |
| 3 | 1.25 | 1 | 5 |
| 4 | 0.32 | 0 | 5 |
| 5 | 1.25 | 0 | 5 |
| | 0.32 | 0 | 5 |
| | 0.08 | 0 | 4 |
| 7 | 1.25 | 0 | 5 |
| | 0.32 | 0 | 5 |
| | 0.08 | 0 | 3 |
| 8 | 0.32 | 1 | 5 |
| 9 | 1.25 | 0 | 5 |
| | 0.32 | 0 | 5 |
| 14 | 1.25 | 0 | 5 |
| | 0.32 | 0 | 4 |
| 15 | 0.32 | 0 | 5 |
| | 0.08 | 0 | 3 |
| 16 | 1.25 | 0 | 5 |
| | 0.32 | 0 | 5 |
| | 0.08 | 0 | 4 |
| 21 | 0.32 | 0 | 5 |
| B | 1.25 | 0 | 2 |
| | 0.32 | 0 | 0 |
| | 0.08 | 0 | 0 |

Test example 10

Foliage treatment test in plow field

Plow-field soil was filled in a vat (area, 15 × 10 $cm^2$; depth, 7 cm), and the seeds of corn, barnyardgrass, large crabgrass, and green foxtail were sowed and cultivated for 14 days. Thereafter, the prescribed amount of the emulsifiable concentrates of the test compounds prepared according to Formulation example 2 was diluted with water of an amount corresponding to 6 liters/are, and uniformly applied to the entire foliage of the test plants over the top by means of a small-sized sprayer. The state of growth of the weeds and crops at that time varied with the kind thereof, but they were in a 1 to 4-leaf stage and from 2 to 42 cm in height. Fifteen days after treatment, the herbicidal activity was examined. The results are shown in Table 13. These tests were carried out in a greenhouse through the entire period of test.

Table 13

| Compound No. | Dosage (g/are) | Herbicidal activity | | | |
|---|---|---|---|---|---|
| | | Corn | Barnyardgrass | Large crabgrass | Green foxtail |
| 17 | 0.5 | 1 | 5 | 4 | 4 |
| C | 0.75 | 1 | 1 | 0 | 0 |

**Claims**

1. A compound of the formula,

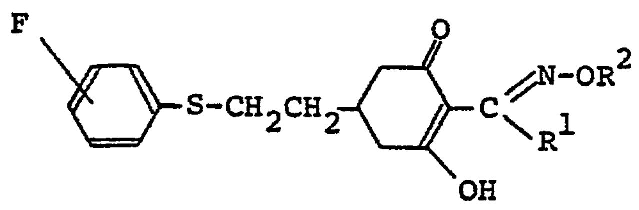

wherein $R^1$ is a hydrogen atom, a $(C_1$-$C_6)$alkyl group or a $(C_1$-$C_4)$alkoxymethyl group and $R^2$ is a $(C_1$-$C_4)$alkyl group, a $(C_3$-$C_6)$alkenyl group, a $(C_3$-$C_6)$alkynyl group, a halo$(C_3$-$C_6)$alkynyl group, a halo$(C_3$-$C_6)$alkenyl group, a cyano$(C_1$-$C_4)$alkyl group, a $(C_1$-$C_4)$alkoxymethyl group or a $(C_1$-$C_4)$alkylthiomethyl group, or a salt thereof such as its metal salt, ammonium salt or organic ammonium salt.

2. The compound according to claim 1, wherein $R^1$ is a $(C_1$-$C_3)$alkyl group and $R^2$ is an ethyl group, an allyl group, a 3-chloroallyl group or a 2-buten-1-yl group.

3. The compound according to claim 2, of the formula,

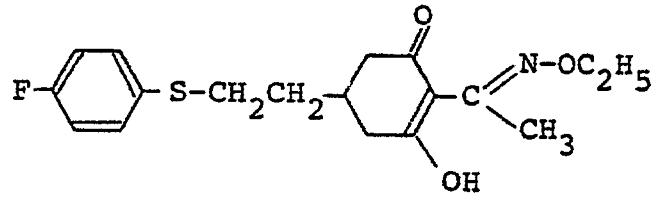

4. The compound according to claim 2, of the formula,

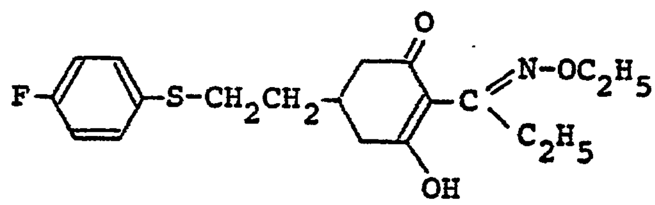

5. The compound according to claim 2, of the formula,

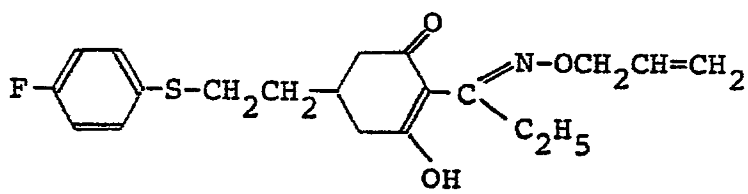

6. The compound according to claim 2, of the formula,

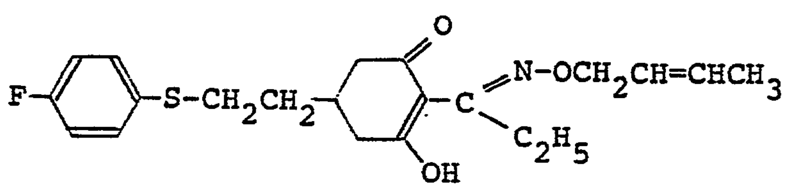

7. The compound according to claim 2, of the formula,

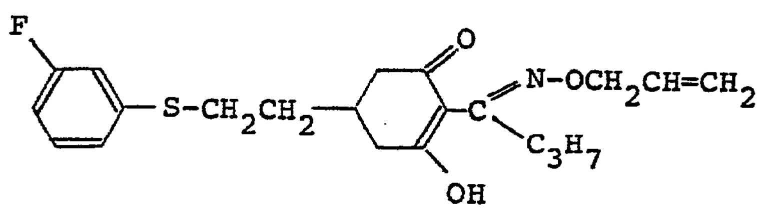

8. A method for producing a compound of the formula,

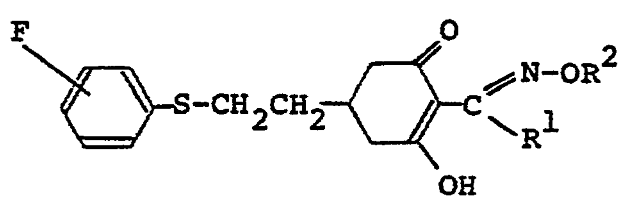

wherein $R^1$ is a hydrogen atom, a ($C_1$-$C_6$) group or a ($C_1$-$C_4$)alkoxymethyl group and $R^2$ is a ($C_1$-$C_4$)alkyl group, a ($C_3$-$C_6$)alkenyl group, a ($C_3$-$C_6$)alkynyl group, a halo($C_3$-$C_6$)alkynyl group, a halo($C_3$-$C_6$)alkenyl group, a cyano($C_1$-$C_4$) alkyl group, a ($C_1$-$C_4$)alkoxymethyl group or a ($C_1$-$C_4$)alkylthiomethyl group, or a salt thereof, which method comprises reacting a compound of the formula,

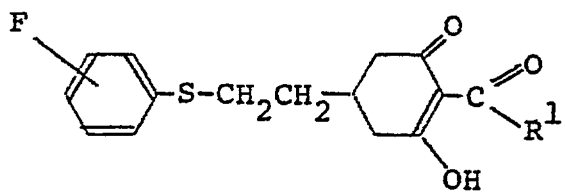

wherein $R^1$ has the meaning described above, with a compound of the formula,

$NH_2OR^2$

wherein $R^2$ has the same meaning described above, or its acid salt, and optionally salifying the resulting product to obtain the said salt thereof.

9. A herbicidal composition which comprises as an active ingredient a herbicidally effective amount of the compound according to claim 1 and an inert carrier and/or diluent.

10. A use of the compound according to claim 1 as a herbicide.

11. A method for controlling weeds, which comprises applying a herbicidally effective amount of the compound according to claim 1 and an inert carrier and/or diluent to the area where weeds grow.

**Revendications**

1. Composé de formule

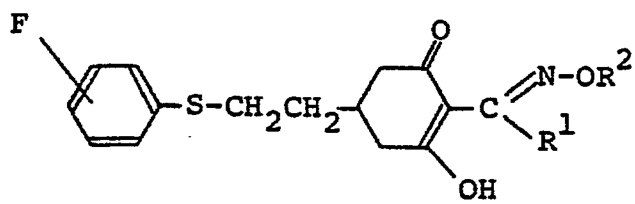

dans laquelle $R^1$ est un atome d'hydrogène, un groupement alkyle en $C_1$–$C_6$ ou un groupement (alcoxy en $C_1$–$C_4$) méthyle et $R^2$ est un groupement alkyle en $C_1$–$C_4$, un groupement alcényle en $C_3$–$C_6$, un groupement alcynyle en $C_3$–$C_6$, un groupement halogénoalcynyle en $C_3$–$C_6$, un groupement cyano (alkyle en $C_1$–$C_4$), un groupement (alcoxy en $C_1$–$C_4$) méthyle ou un groupement (alkyl en $C_1$–$C_4$)–thiométhyle, ou un de ses sels comme ses sels métalliques, sel d'ammonium ou sels de dérivés organiques d'ammonium.

2. Composé selon la revendication 1, dans lequel $R^1$ est un groupement alkyle en $C_1$–$C_3$ et $R^2$ est un groupement éthyle, allyle, 3-chloroallyle ou 2-butène-1-yle.

3.Composé selon la revendication 2, de formule

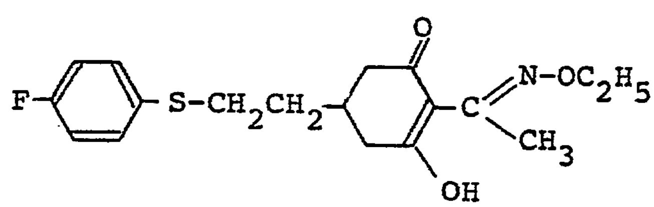

4. Composé selon la revendication 2, de formule

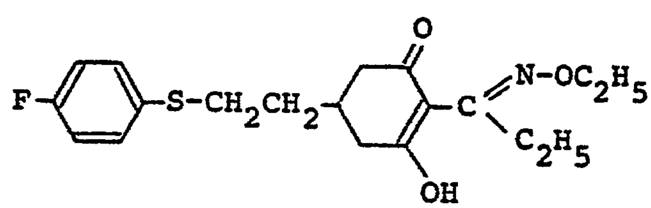

5. Composé selon la revendication 2, de formule

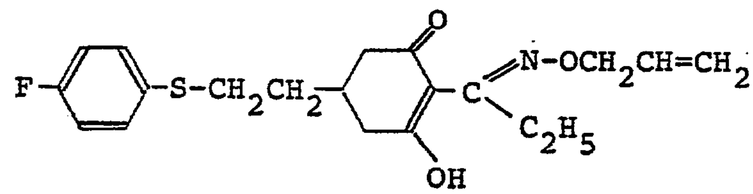

6. Composé selon la revendication 2, de formule

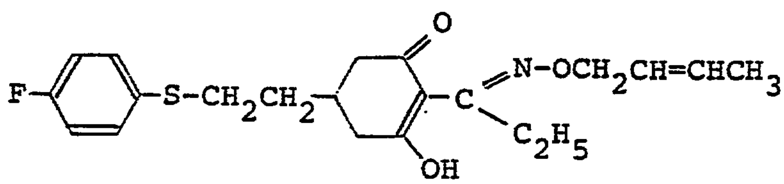

7. Composé selon la revendication 2, de formule

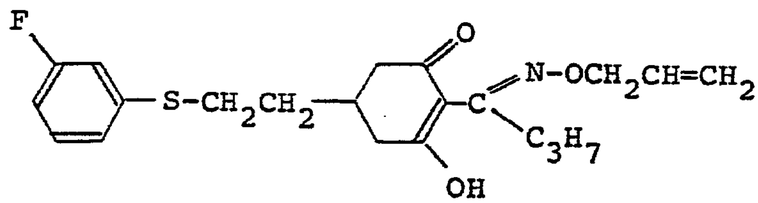

8. Procédé de préparation d'un composé de formule

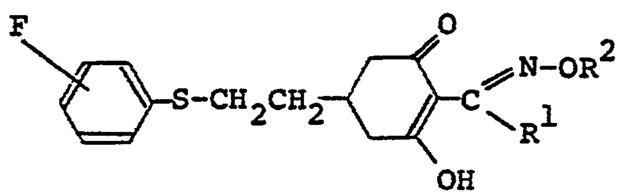

dans laquelle $R^1$ est un atome d'hydrogène, un groupement alkyle en $C_1$–$C_6$ ou un groupement (alcoxy en $C_1$–$C_4$) méthyle et $R^2$ est un groupement alkyle en $C_1$–$C_4$, un groupement alcényle en $C_3$–$C_6$, un groupement alcynyle en $C_3$–$C_6$, un groupement halogénoalcynyle en $C_3$–$C_6$, un groupement halogénoalcényle en $C_3$–$C_6$, un groupement cyano (alkyle en $C_1$–$C_4$), un groupement (alcoxy en $C_1$–$C_4$) méthyle ou un groupement (alkyl en $C_1$–$C_4$)-thiométhyle, ou un de ses sels procédé qui consiste à faire réagir un composé de formule

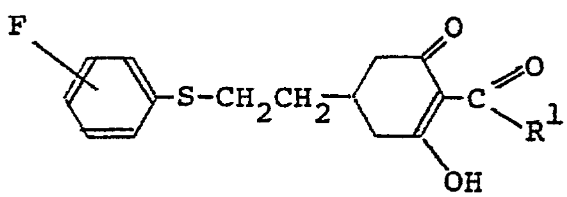

dans laquelle $R^1$ est tel que décrit précédemment, avec un composé de formule

$NH_2OR^2$

dans laquelle $R^2$ est tel que défini précédemment, ou ses sels d'acide, et éventuellement à salifier le produit résultant pour en obtenir ledit sel.

9. Composition herbicide qui comprend comme ingrédient actif une quantité afficace sur le plan herbicide du composé selon la revendication 1 et un véhicule et/ou diluant inerte.

10. Utilisation du composé selon la revendication 1 comme herbicide.

11. Procédé de lutte contre les mauvaises herbes, qui consiste à appliquer une quantité efficace sur le plan herbicide du composé selon la revendication 1 avec un véhicule et/ou un support inerte, à la zone où poussent les mauvaises herbes.

## Patentansprüche

1. Eine Verbindung der Formel

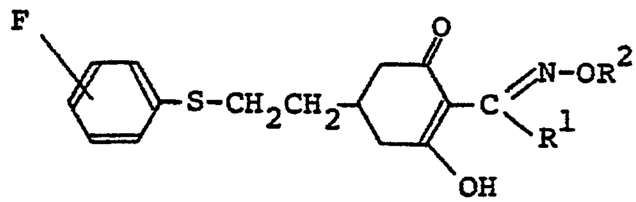

in der $R^1$ ein Wasserstoffatom, einen $(C_1–C_6)$-Alkylrest oder einen $(C_1–C_4)$-Alkoxymethylrest bedeutet und $R^2$ einen $(C_1–C_4)$-Alkylrest, einen $(C_3–C_6)$-Alkenylrest, einen $(C_3–C_6)$-Alkinylrest, einen Halogen-$(C_3–C_6)$-alkinylrest, einen Halogen-$(C_3–C_6)$-alkenylrest, einen Cyano-$(C_1–C_4)$-alkylrest, einen $(C_1–C_4)$-Alkoxymethylrest oder einen $(C_1–C_4)$-Alkylthiomethylrest darstellt, oder ein Salz davon, wie ihr Metallsalz, Ammoniumsalz oder organisches Ammoniumsalz.

2. Verbindung nach Anspruch 1, in der $R^1$ einen $(C_1–C_3)$-Alkylrest bedeutet und $R^2$ eine Ethylgruppe, eine Allylgruppe, eine 3-Chlorallylgruppe oder eine 2-Buten-1-yl-Gruppe darstellt.

3. Verbindung nach Anspruch 2 der Formel

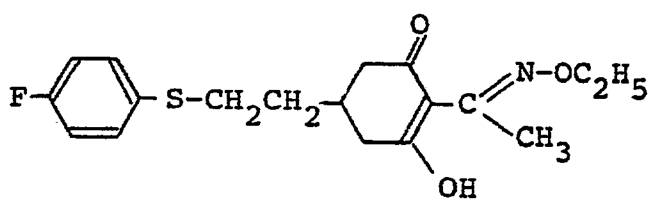

4. Verbindung nach Anspruch 2 der Formel

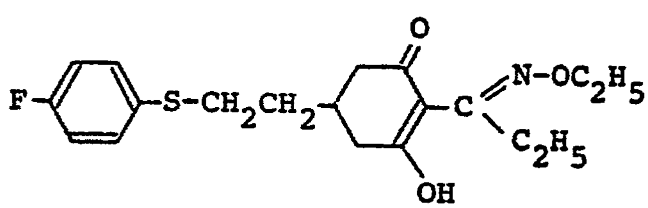

5. Verbindung nach Anspruch 2 der Formel

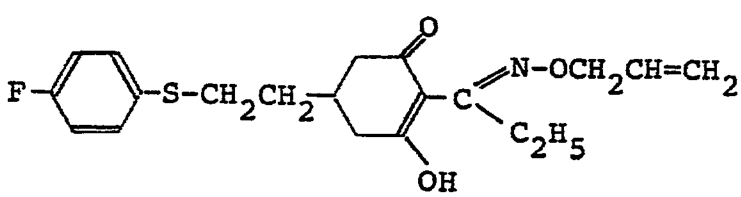

6. Verbindung nach Anspruch 2 der Formel

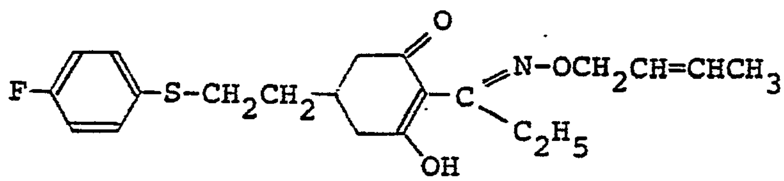

7. Verbindung nach Anspruch 2 der Formel

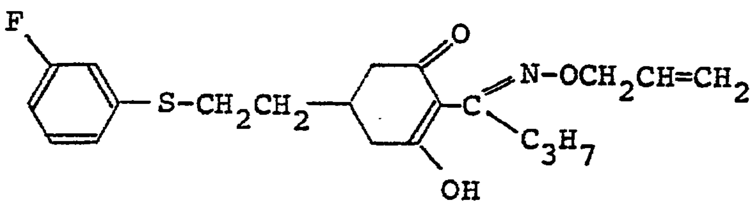

8. Verfahren zur Herstellung einer Verbindung der Formel

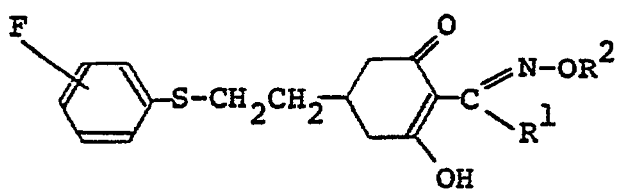

in der $R^1$ ein Wasserstoffatom, einen ($C_1$–$C_6$)-Alkylrest oder einen ($C_1$–$C_4$)-Alkoxymethylrest bedeutet und $R^2$ einen ($C_1$–$C_4$)-Alkylrest, einen ($C_3$–$C_6$)-Alkenylrest, einen ($C_3$–$C_6$)-Alkinylrest, einen Halogen-($C_3$–$C_6$)-alkinylrest, einen Halogen-($C_3$–$C_6$)-alkenylrest, einen Cyano-($C_1$–$C_4$)-alkylrest, einen ($C_1$–$C_4$)-Alkoxymethylrest oder einen ($C_1$–$C_4$)-Alkylthiomethylrest darstellt, oder eines Salzes davon, welches Verfahren die Umsetzung einer Verbindung der Formel

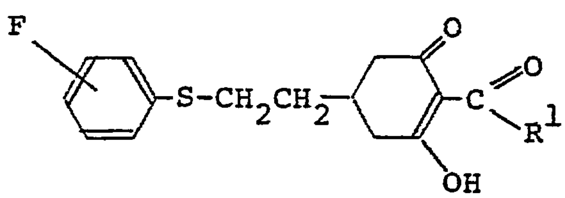

in der $R^1$ die vorstehend angegebene Bedeutung hat, mit einer Verbindung der Formel

$NH_2OR^2$

in der $R^2$ die vorstehend angegebene Bedeutung aufweist, oder ihrem Salz mit einer Säure, und gegebenenfalls Salzbildung des erhaltenen Produktes umfaßt, wobei das genannte Salz davon erhalten wird.

9. Herbizides Mittel, umfassend als Wirkstoff eine herbizid wirksame Menge der Verbindung nach Anspruch 1 und einen inerten Träger und/oder ein Verdünnungsmittel.

10. Verwendung der Verbindung nach Anspruch 1 als Herbizid.

11. Verfahren zur Bekämpfung von Unkräutern, umfassend das Aufbringen einer herbizid wirksamen Menge der Verbindung nach Anspruch 1 und eines inerten Trägers und/oder Verdünnungsmittels auf die Fläche, auf der die Unkräuter wachsen.